(19) Europäisches Patentamt
European Patent Office
Office européen des brevets

(11) EP 0 546 877 B1

(12) FASCICULE DE BREVET EUROPEEN

(45) Date de publication et mention
de la délivrance du brevet:
**05.03.1997 Bulletin 1997/10**

(51) Int. Cl.$^6$: **C03B 19/06**, C03B 11/14,
C03C 14/00, B32B 3/28

(21) Numéro de dépôt: 92403018.2

(22) Date de dépôt: 09.11.1992

(54) **Procédé de réalisation de pièces complexes creuses par pressage uniaxial à chaud d'un matériau composite à matrice vitreuse et pièces issues du procédé**

Verfahren zum Herstellen von komplexen Hohlkörpern durch uniaxiales Heisspressen eines Verbundmaterials mit einer glasartigen Matrix und die so erhaltenen Produkte

Process for making hollow, complex structures by uniaxial hot pressing of a composite material having a vitreous matrix and the products obtained thereby

(84) Etats contractants désignés:
**DE GB IT**

(30) Priorité: **29.11.1991 FR 9114860**

(43) Date de publication de la demande:
**16.06.1993 Bulletin 1993/24**

(73) Titulaire: **AEROSPATIALE Société Nationale Industrielle**
**75781 Paris Cédex 16 (FR)**

(72) Inventeurs:
• **Donzac, Jean-Marc, Nicolas Pascal**
**F-33160 St Medard en Jalles (FR)**
• **Marceau, Nicolas**
**F-33160 St.Medard en Jalles (FR)**

(74) Mandataire: **Lhuillier, René et al**
**Cabinet Lepeudry,**
**52, avenue Daumesnil**
**75012 Paris (FR)**

(56) Documents cités:
**EP-A- 0 431 301**      **EP-A- 0 458 729**
**DE-A- 1 949 209**      **FR-A- 2 521 126**
**FR-A- 2 527 517**      **GB-A- 2 116 112**
**US-A- 3 641 230**      **US-A- 4 857 093**

## Description

L'invention se situe dans le domaine des techniques d'élaboration de structures porteuses à haute température, d'un matériau composite à matrice vitreuse et concerne plus précisément un procédé de réalisation basé sur le pressage de matériaux et d'inserts amovibles associés.

Par matériau composite à matrice vitreuse on entend un renfort composé de fibres céramiques par exemple SiC, C, $Al_2O_3$, $SiO_2$ etc qui peuvent être longues dans des structures trois directions, ou courtes, et une matrice vitreuse constituée par au moins un oxyde de type SiO2, $Al_2O_3$, $ZrO_2$, $B_2O_3$, ou les oxydes alcalins ou alcalino-terreux etc... Ces matériaux sont densifiés par pressage uniaxial ou isostatique à chaud, ce qui permet de réaliser des pièces simples du genre de plaques ou de calottes.

On connaît notamment par le FR-A 2 521 126 des structures composites de verre renforcées de fibres de carbure de silicium discontinues qui présentent une résistance mécanique, une ténacité et une stabilité à l'oxydation élevées même à hautes températures, et qui sont donc adaptées à la réalisation de ces pièces simples.

Pour réaliser des articles composites de formes complexes, à matrice de verre renforcée de fibres, les procédés connus apparaissent inadéquats. En effet le renforcement des articles composites par des fibres continues, obtenu par l'utilisation de rubans, de feutres ou de papiers de fibres alignées qui sont infiltrées par des pâtes de verre, découpés, puis orientés et empilés dans une matrice pour le pressage à plat, permet d'obtenir seulement un arrangement plat des fibres, qui ne pourraient être déformées dans des formes complexes sans subir une sérieuse déformation des fibres. Pour pallier à cet inconvénient, on connaît une solution qui consiste à préimprégner des feuilles à renforcement de fibres d'un liquide contenant un liant polymère thermoplastique et une poudre de verre. Puis les feuilles sont découpées en un modèle particulier de la partie composite complexe à réaliser, et elles sont empilées sur des préformes qui sont moulées à chaud. Enfin on chauffe l'article formé pour décomposer et enlever le liant temporaire avant de presser à chaud l'article traité pour former le produit composite final de haute résistance, comme décrit dans le FR-A 2 527 517.

Le pressage à chaud de ces matériaux peut être assuré - comme le montre le FR-A 2 658 753 - par au moins un élément de moule en matériau résistant à hautes températures, qui possède bien entendu des propriétés de résistance mécanique mais aussi des propriétés de conductivité thermique anisotrope de telle sorte que le transfert thermique préférentiel s'effectue dans le four de pressage en direction des zones de la pièce les plus éloignées des moyens de chauffage du four.

Ces procédés conviennent donc pour l'obtention de pièces complexes, mais pas toutes et notamment pas les pièces complexes creuses incorporant des raidisseurs internes.

La Demanderesse a - dans ce but - mis au point un procédé permettant d'obtenir ce type de pièces.

L'invention a donc pour objet un procédé de réalisation des pièces complexes creuses par pressage uniaxial à chaud d'un matériau composite à matrice vitreuse renforcée de fibres, à partir de couches successives introduites en quantité nécessaire et suffisante pour obtenir le composite final dans un volume délimité par les parois d'un moule renfermant des inserts amovibles, procédé qui consiste :

- à placer au fond du moule une couche de matériau fibreux ;
- à disposer au-dessus de ce matériau une première série d'inserts amovibles ;
- à recouvrir les parois desdits inserts d'une nouvelle couche de matériau fibreux ;
- à disposer au-dessus de cette couche une deuxième série d'inserts amovibles qui se placent dans les évidements ménagés par les premiers ;
- à recouvrir l'ensemble d'une couche supérieure de matériau vitreux ;
- à appliquer à chaud sur l'ensemble une pression mécanique uniformément répartie ;
- à extraire du moule l'ensemble pièce-inserts ; et
- à retirer les inserts amovibles.

Le matériau introduit dans le moule est composé par des éléments en composites céramiques préalablement densifiés, ou il est constitué du matériau de base contenant de la fibre et la matrice vitreuse, ou encore il est composé du matériau de base non densifié et du matériau déjà densifié. Le matériau constituant les inserts est du graphite haute performance ou du matériau composite carbone-carbone, les inserts ayant subi préalablement un traitement de surface par enduction d'une couche de matériau inerte vis-à-vis du verre.

D'autres caractéristiques et avantages de l'invention ressortiront à la lecture de la description qui va suivre faisant référence aux dessins annexés qui représentent:

Figure 1 une vue schématique en coupe d'une pièce en cours d'élaboration,
figure 3 une vue en coupe d'un outillage de raidisseur,

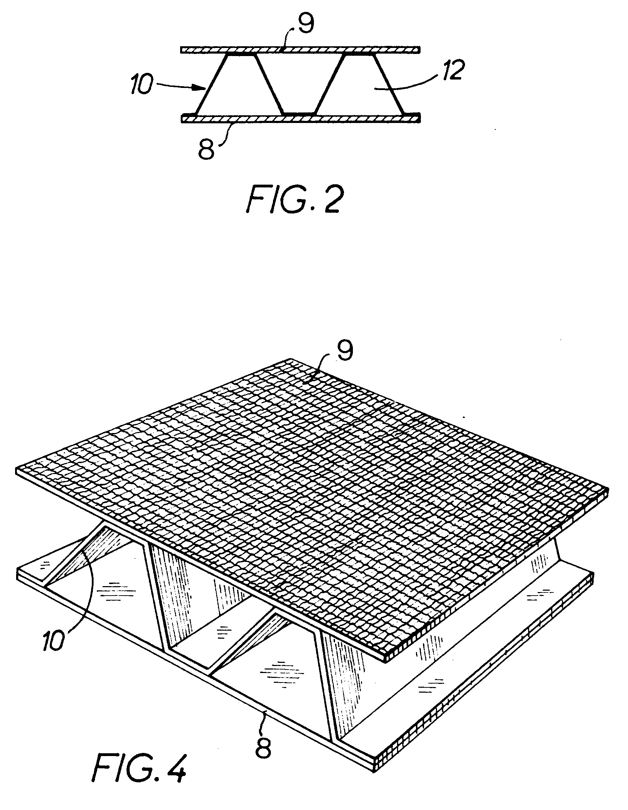

figure 2, une vue en coupe et
figure 4, une vue en perspective d'un panneau obtenu à l'aide du procédé.

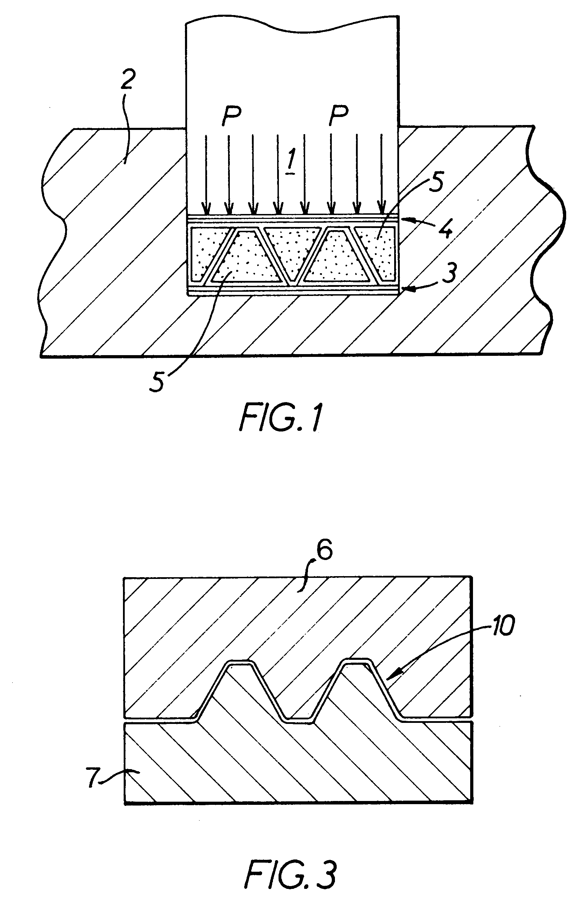

La figure 1 illustre schématiquement l'élaboration de la pièce à réaliser.

L'équipement utilisé est capable de presser uniaxialement à chaud un volume utile 1 délimité par les paroi d'un moule 2.

On introduit à l'intérieur de ce volume la quantité de matériau nécessaire et suffisante pour obtenir le composite final. Ce matériau est constitué par des éléments de matériau de base contenant la fibre et la matrice vitreuse. La quantité de matériau est définie par calcul, pour répondre aux critères de qualité du matériau à obtenir. Les pressages sont effectués à volume constant c'est-à-dire que le matériau introduit dans le moule a un volume équivalent à celui de la pièce densifiée à obtenir. L'épaisseur des parois est déterminée par le nombre de nappes la constituant . Cette épaisseur est donnée par la formule :

$$e = \frac{n}{V_F} \times \frac{ms}{mv}$$

dans laquelle e est l'épaisseur finale de la paroi, mv la masse volumique de la fibre, $V_F$ le pourcentage volumique de fibres, dans le matériau final, ms la masse surfacique d'une nappe sèche et n le nombre de nappes.

A titre d'exemple, pour n = 1, mv = $2,55.10^3$ kg/m3, ms = 0,443 kg/m², $V_F$ = 0,43, on obtient e = $0,4.10^{-3}$m.

Pour réaliser une pièce comme on voit à la figure 1, on place une couche 3 de nappes imprégnées au fond du moule 2 puis on dispose par dessus les deux inserts 5 dont la pointe est orientée vers le haut. On recouvre ensuite les parois inclinées et supérieures des inserts d'une nouvelle couche de nappes imprégnées avant de mettre en place les trois inserts 5 à pointe orientée vers le bas qui se placent dans les évidements ménagés par les premiers. Enfin on recouvre l'ensemble d'une couche supérieure 4 de nappes imprégnées, les couches 3 et 4 formant les peaux inférieure et supérieure de la pièce.

Les inserts 5 correspondent aux zones creuses de la pièce finale. Le matériau pour la fabrication des inserts prend en compte les contraintes de mise en oeuvre des composites à réaliser : pression, température, atmosphère. Dans le cas de matériau composite à matrice vitreuse réalisé sous atmosphère neutre et faible pression de pressage, l'usage d'un graphite haute performance est possible. D'autres cas sont envisageables : utilisation du carbone-carbone quand on veut augmenter les performances mécaniques, ou d'aciers réfractaires dans le cas de températures de mise en oeuvre inférieures à 1000°C sous air, ou de métaux nobles, réfractaires et composites réfractaires pour des applications haute température sous atmosphère quelconque. On notera que les couches 3, 4 de matériau et les inserts 5 sont disposés à l'intérieur du volume 1 suivant une suite logique alternant les nappes de fibres imprégnées de poudre de verre maintenue par un liant, et les inserts. On peut prévoir par exemple de constituer la paroi inférieure de cinq plis ou nappes de fibres superposées dont la cinquième a une trame orientée perpendiculairement à la précédente. Puis après avoir placé les premiers inserts, on dépose sur eux deux nappes orientées dans le même sens de trame que la cinquième. Après ajout des autres inserts on place la peau supérieure formée aussi de cinq nappes superposées dont la première a une trame orientée comme les deux nappes intermédiaires.

Pour l'assemblage et la densification de ces éléments destinés à constituer la future pièce, on effectue un pressage à chaud sous une pression P uniformément répartie, comme pour les techniques d'élaboration de pièces simples. Ensuite on libère l'ensemble constitué de la pièce et de ses inserts en l'ôtant de la chambre du moule. Puis les inserts amovibles sont extraits généralement sans détérioration par simple action mécanique. Cette opération n'est rendue possible que par un traitement de surface spécifique préalable des inserts. Dans le cas d'inserts en carbone-carbone ou en graphite, ce traitement est obtenu par enduction d'une fine couche de matériau inerte vis à vis du verre (par exemple nitrure de bore ou graphite colloïdal). Dans le cas d'inserts en réfractaire (métaux ou composites) un poli miroir est nécessaire. Les surfaces en contact avec le matériau, que ce soient les plaques, contre-plaques, poinçon du moule ou inserts sont revêtues d'une couche calibrée d'un dixième de millimètre de nitrure de bore ou de graphite colloïdal. Une barrière de diffusion est donc créée entre le graphite et le verre pour éviter le collage du matériau et faciliter par conséquent le démoulage de l'ensemble. Ledit revêtement peut être obtenu par projection d'une dispersion de nitrure de bore dans l'eau, ou par enduction de graphite colloïdal.

Selon le procédé précédemment décrit, on peut réaliser un panneau sandwich dont les deux peaux externes sont reliées par un raidisseur ondulé, les 3 éléments étant préalablement densifiés. On a représenté à la figure 2 un panneau autoraidi formé d'une peau inférieure 8, d'une peau supérieure 9 et d'un raidisseur intermédiaire 10. Le raidisseur présente une forme développable symétrique par rapport au plan médian. Il forme une entretoise entre les peaux et ménage entre celles-ci des alvéoles 12. Les efforts latéraux de pressage se répartissent donc d'une façon homogène. Les angles vifs du raidisseur sont rayonnés pour former des arrondis évitant de créer des zones d'écrasement des fibres.

Pour fabriquer le panneau sandwich de la figure 2, on réalise un assemblage de trois sous-ensembles par copressage à chaud de préimprégnés empilés, à savoir une peau inférieure 8 formée de cinq plis, un raidisseur monopli ou multipli intermédiaire 10 et une peau supérieure 9 également formée de cinq plis. Les panneaux sandwichs peuvent résulter d'assemblage d'éléments déjà densifiés et/ou préimprégnés.

On peut préformer le raidisseur 10 comme le montre la figure 3 en utilisant un outillage dont le poinçon inférieur 7 et le poinçon supérieur 6 sont profilés pour incorporer les formes des inserts. Le raidisseur ainsi réalisé est ensuite placé dans le moule au dessus des inserts inférieurs et il est lié par pressage aux plaques densifiées, selon le procédé décrit, les inserts étant également ôtés après le pressage.

Le procédé permet de réaliser notamment un panneau structural tel que celui représenté à la figure 4, dans lequel apparaît clairement le raidisseur interne et les deux peaux.

## Revendications

1. Procédé de réalisation de pièces complexes creuses par pressage uniaxial à chaud d'un matériau composite à matrice vitreuse renforcée de fibres, à partir de couches successives introduites en quantité nécessaire et suffisante pour obtenir le composite final dans un volume délimité par les parois d'un moule renfermant des inserts amovibles caractérisé en ce que :

   - on place au fond du moule une couche de matériau fibreux ;
   - on dispose au-dessus de ce matériau une première série d'inserts amovibles ;
   - on recouvre les parois desdits inserts d'une nouvelle couche de matériau fibreux ;
   - on dispose au-dessus de cette couche une deuxième série d'inserts amovibles qui se placent dans les évidements ménagés par les premiers ;
   - on recouvre l'ensemble d'une couche supérieure de matériau vitreux ;
   - on applique à chaud sur l'ensemble une pression mécanique uniformément répartie ;
   - on extrait du moule l'ensemble pièce-inserts ; et
   - on retire les inserts amovibles.

2. Procédé de réalisation selon la revendication 1, caractérisé en ce qu'au moins une des couches successives est en matériau préalablement densifié.

3. Procédé de réalisation selon la revendication 1, caractérisé en ce que le matériau constituant les inserts est du graphite haute performance ou du carbone-carbone.

4. Procédé de réalisation selon les revendications 1 et 3, caractérisé en ce que les inserts ont subi préalablement un traitement de surface par enduction d'une couche de matériau inerte vis-à-vis du verre.

5. Procédé de réalisation selon la revendication 1, caractérisé en ce que les surfaces des éléments en contact avec le matériau sont revêtues d'une couche calibrée de produit favorisant le démoulage de l'ensemble.

## Claims

1. Process for producing complex hollow pieces through the hot uniaxial pressing of a composite material having a fibre reinforced vitreous matrix from successive layers introduced in a quantity necessary and sufficient to obtain the final composite into a volume delimited by the walls of a mould containing removable inserts, characterised in that:

   - a layer of fibrous material is placed at the bottom of the mould;
   - a first series of movable inserts is disposed over this material;
   - the walls of the said inserts are covered with a fresh layer of fibrous material;
   - a second series of removable inserts are disposed over this layer and are placed in the recesses provided by the first ones;
   - the whole is covered by an upper layer of vitreous material;
   - uniformly distributed mechanical pressure is applied hot to the whole;
   - the piece-inserts assembly is removed from the mould; and
   - the removable inserts are withdrawn.

2. Production process according to claim 1, characterized in that at least one of the successive layers is made of a previously densified material.

3. Production process according to claim 1, characterized in that the material constituting the inserts is high performance graphite or carbon-carbon.

4. Production process according to claims 1 and 3, characterised in that the inserts have previously undergone a surface treatment by coating with a layer of material inert to glass.

5. Production process according to claim 1, characterised in that the surfaces of the elements in contact with the material are coated with a calibrated layer of product facilitating removal of the whole from the mould.

## Patentansprüche

1. Verfahren zur Herstellung von komplexen Hohlkörpern durch uniaxiales Heißpressen eines Verbundmaterials mit einer mit Fasern verstärkten, glasartigen Matrix auf der Grundlage von aufeinanderfolgenden Schichten, die in einer notwendigen und ausreichenden Menge eingebracht sind, um das endgültige Komposit in einem Volumen zu erhalten, das durch die Wände einer Form, die lose Einsatzteile einschließt, begrenzt ist, dadurch gekennzeichnet, daß

   - am Boden der Form eine Schicht aus faserartigem Material plaziert wird;
   - oberhalb dieses Materials eine erste Serie von losen Einsatzteilen angeordnet wird;
   - die Wände der Einsatzteile mit einer neuen Schicht aus faserartigem Material bedeckt werden;
- oberhalb dieser Schicht eine zweite Serie von losen Einsatzteilen angeordnet wird, die sich in den durch die ersten ausgesparten Vertiefungen plazieren;
- der Aufbau mit einer oberen Schicht aus glasartigem Material bedeckt wird;
- ein gleichmäßig verteilter mechanischer Druck unter Wärme auf den Aufbau angewendet wird;
- der Körper-Einsatzteile-Aufbau aus der Form entnommen wird; und
- die losen Einsatzteile entfernt werden.

2. Herstellungsverfahren nach Anspruch 1, dadurch gekennzeichnet, daß wenigstens eine der aufeinanderfolgenden Schichten aus einem zuvor verdichteten Material besteht.

3. Herstellungsverfahren nach Anspruch 1, dadurch gekennzeichnet, daß das die Einsatzteile bildende Material aus Hochleistungsgraphit oder aus Kohlenstoff-Kohlenstoff besteht.

4. Herstellungsverfahren nach den Ansprüchen 1 und 3, dadurch gekennzeichnet, daß die Einsatzteile zuvor einer Oberflächenbehandlung durch Überziehen mit einer Schicht aus gegenüber Glas inertem Material unterzogen wurden.

5. Herstellungsverfahren nach Anspruch 1, dadurch gekennzeichnet, daß die Oberflächen der Elemente in Kontakt mit dem Material mit einer bemessenen Schicht aus einem Produkt überzogen werden, welches das Entnehmen des Aufbaus aus der Form begünstigt.

FIG.1

FIG.3

EP 0 546 877 B1

FIG. 2

FIG. 4